# EUROPEAN PATENT SPECIFICATION

(11) **EP 4 074 387 B1**
(45) Date of publication and mention of the grant of the patent: **02.04.2025**
(21) Application number: 21751227.6
(22) Date of filing: 05.02.2021
(51) Int. Cl.: G05D 1/00, G06V 20/52, A63B 102/32, A63B 47/02, A63B 69/36

(54) **DISPERSED OBJECT COLLECTION SYSTEM AND DISPERSED OBJECT COLLECTION METHOD**
SAMMELSYSTEM FÜR VERSTREUTE OBJEKTE UND SAMMELVERFAHREN FÜR VERSTREUTE OBJEKTE
SYSTÈME DE COLLECTE D'OBJETS DISPERSÉS ET PROCÉDE DE COLLECTE D'OBJETS DISPERSÉS

(30) Priority: 06.02.2020 JP 2020018746
(43) Date of publication of application: 19.10.2022
(73) Proprietor: Yamabiko Corporation, Ohme-shi Tokyo 198-8760 (JP)
(72) Inventor: KOSHIKAWA Yoshiharu, Ohme-shi, Tokyo 198-8760 (JP); INABA Eiki, Ohme-shi, Tokyo 198-8760 (JP); NAKANO Kenji, Ohme-shi, Tokyo 198-8760 (JP); FUSE Yoichi, Ohme-shi, Tokyo 198-8760 (JP); YAMADA Ryota, Ohme-shi, Tokyo 198-8760 (JP)
(74) Representative: Canzler & Bergmeier Patentanwälte Partnerschaft mbB
(86) International application number: PCT/JP2021/004370
(87) International publication number: WO 2021/157707

(56) References cited:
- JP-A- 2008 220 935
- KR-A- 20100 094 909
- KR-B1- 101 430 103
- KR-B1- 101 430 103
- US-A1- 2010 250 024
- US-A1- 2016 243 970
- US-A1- 2020 019 752
- ZHIQIANG MA ET AL: "Autonomous technologies of global vision-based golf ball collection robot", AUTOMATION AND LOGISTICS (ICAL), 2011 IEEE INTERNATIONAL CONFERENCE ON, IEEE, 15 August 2011 (2011-08-15), pages 497 - 500, XP031941129, ISBN: 978-1-4577-0301-0, DOI: 10.1109/ICAL.2011.6024770

## Description

### Technical field

The present invention relates to a dispersed object collection system configured to collect dispersed objects in a working area while running by itself, and a dispersed object collection method.

### Background art

An example of dispersed objects includes balls hit and scattered in a golf practice range. Conventionally, there has been known a self-running ball collection system including a memory configured to store information about ball distribution in a working area, and a processor configured to guide a vehicle into the working area based on the information stored in the memory and collect the balls (see Japanese Patent Application Laid-Open No. 2008-220935).

US 2010/250024 A1 describes a motorised system with electric traction with computer vision for outdoor environments, which can interact with the surrounding environment in an autonomous way or remotely operated. The vehicle tows a trailer that permits, amongst other functions, to perform golf balls picking. This prior art document discloses a dispersed object collection system and a dispersed object collection method according to the respective preamble of independent claims 1 and 8.

KR 2010 0094909 A discloses a golf ball picking system comprising a robot which is navigated within a golf range and which efficiently collects golf balls in that the golf ball distribution on the green is considered.

US 2020/019752 A1 discloses a further collecting system comprising a machine which is navigated within a field so as to efficiently collect dispersed objects such as, e.g., golf balls.

KR 101 430103 B1 discloses another golf ball picking system comprising a robot which is efficiently navigated on the basis of the golf ball distribution.

The article Zhiqiang Ma et al.: "Autonomous technologies of global vision-based golf ball collection robot", in AUTOMATION AND LOGISTICS (ICAL), 2011 IEEE INTERNATIONAL CONFERENCE ON, IEEE, 15 August 2011, pages 497-500, discloses yet another golf ball picking system comprising a robot which is efficiently navigated based on a determined golf ball distribution.

### Summary of Invention

### Technical Problem

The self-running collection systems according to the conventional art have a problem to improve the efficiency of the running of the vehicle to collect more dispersed objects for a short time. To address this, the conventional art proposes to run the vehicle based on the information about the distribution of the dispersed objects in the working area, and describes that a location where balls are or may be more highly distributed or more gathered than other locations is designated as the working area to be prioritized.

However, about the setting of the working area, the conventional art vaguely describes that it is based on predicted distribution of dispersed objects, or based on monitoring of dispersed condition by a vision sensor, but does not describe a concrete method of setting the working area to reduce the running of the vehicle not performing the collection work as much as possible.

In addition, in a case where the collection system is electrically operated to run the vehicle and perform the work, when a battery equipped in the vehicle is charged during the work, the efficiency of the work is significantly down. Therefore, in order to perform efficient collection work, it is important for the electric collection system to reduce the consumption of the battery as much as possible to reduce the number of times to charge the battery (or avoid charging the battery) during the work.

The more the load of an electric motor is increased, the greater the degree of consumption of the battery is. Therefore, it is not satisfied to reduce the consumption of the battery only by simply reducing the running distance. The above-described conventional art does not describe the setting of the working area in view of the battery consumption, and therefore has the problem that it is not possible to effectively promote the efficiency of the work when being applied to the electric collection system.

The present invention is proposed to address the above-described problem. It is therefore an object of the invention to present specific measures to improve the efficiency of the collection work of a self-running dispersed object collection system, by reducing the running of a machine not performing the collection work to collect dispersed objects as much as possible, and to effectively promote the efficiency of the work by setting a working area in view of the battery consumption of the electric collection system.

### Solution to Problem

To achieve the above-described object, the invention provides a dispersed object collection system according to claim 1. In addition, the invention relates to a dispersed object collection method according to claim 8.

### Advantageous effect

According to the dispersed object collection system having the above-described feature, it is possible to improve the efficiency of the collection work of the self-running dispersed object collection system by reducing the running of a machine not performing the collection work to collect dispersed objects as much as possible, and effectively promote the efficiency of the work by setting the working area in view of the battery consumption of the electric collection system.

### Brief Description of Drawings

Fig. 1 illustrates the working environment of a dispersed object collection system;
Fig. 2 illustrates the equipment configuration of the dispersed object collection system;
Fig. 3 illustrates an operation process of the dispersed object collection system (dispersed object collection method).
Fig. 4 illustrates an example of setting of a working area ((a) specifying an aggregation region; (b) specifying outermost dispersed objects; and (c) setting the working area);
Fig. 5 illustrates an example of specifying the aggregation region;
Fig. 6 illustrates an example of setting the running route of a machine; and
Fig. 7 illustrates an example of setting the running route of the machine for a plurality of aggregation regions.

### Description of Embodiments

Hereinafter, an embodiment of the present invention will be described with reference to the drawings. The same reference numbers in the different drawings indicate the same functional parts, and therefore repeated description for each of the drawings is omitted.

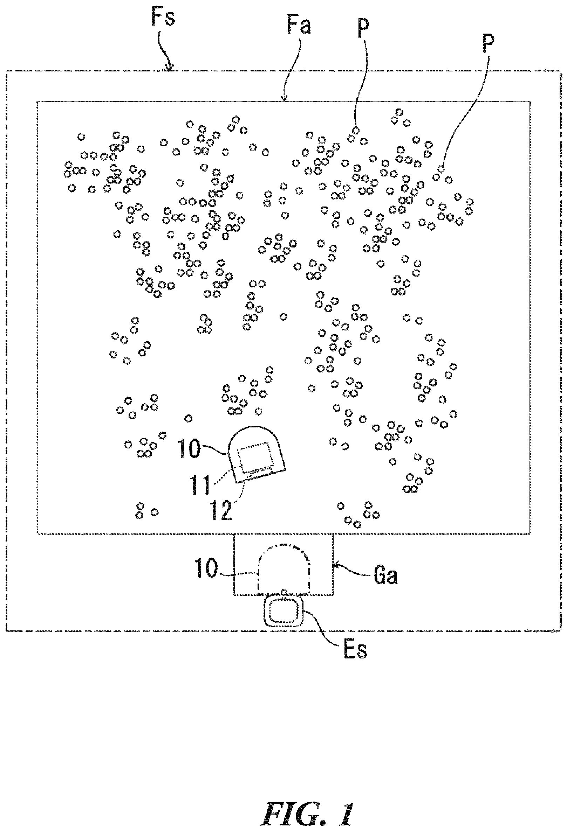

The dispersed object collection system is configured to appropriately set an activity area Fa in a facility zone Fs as illustrated in Fig. 1, and collect dispersed objects P dispersed in the activity area Fa by causing a machine 10 to run by itself in the activity area Fa. A collection place Ga is provided outside the activity area Fa in the facility zone Fs. The machine 10 starts from the collection place Ga or another start point, and accommodates the dispersed objects P into an accommodation section 11 provided in or outside the machine 10 in the course of running by itself in the activity area Fa.

After the end of predetermined collection work, the machine 10 returns to the collection place Ga, and discharges the dispersed objects P accommodated in the accommodation section 11 to the collection place Ga. The collection place Ga is provided with charging equipment Es. The machine 10 is electrically operated, and when the machine 10 returns to the collection place Ga, a battery 12 of the machine 10 is charged by the charging equipment Es.

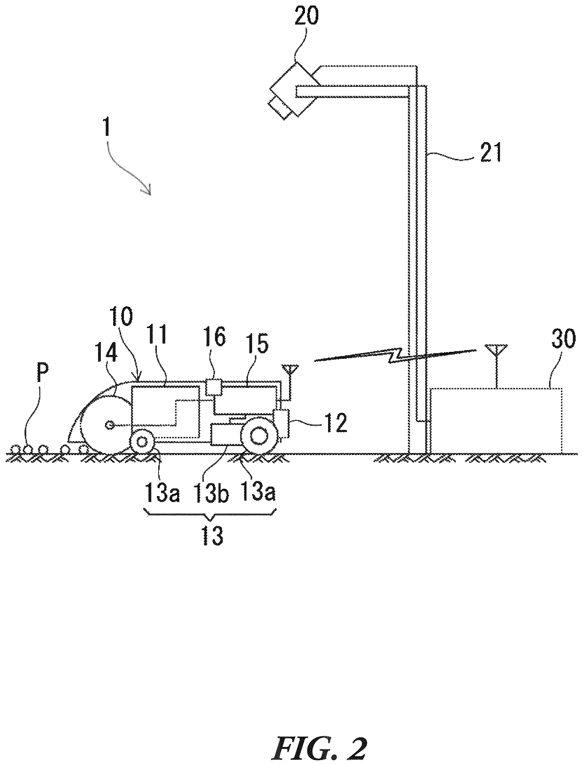

Fig. 2 illustrates the equipment configuration of the dispersed object collection system. A dispersed object collection system 1 includes a machine 10 configured to run by itself in the above-described activity area Fa; a camera 20 configured to look down at part or the whole of the activity area Fa to capture an image of part or the whole of the activity area Fa; and a work instruction transmitter 30 configured to acquire the image captured by the camera 20 and transmit a work instruction to the machine 10.

The machine 10 includes, in addition to the above-described accommodation section 11 and the battery 12, a running part 13 (running wheels 13a and running drive part 13b) configured to run on a field surface of the activity area Fa; a pickup mechanism 14 configure to pick up the dispersed objects P from the field surface and put the dispersed objects P into the accommodation section 11; and a controller 15 configured to control the running part 13 and the pickup mechanism 14 based on an instruction signal received from the work instruction transmitter 30, and a detection signal from a position detector 16 such as a GPS receiver.

The camera 20 transmits the captured image of part or the whole of the activity area Fa to the work instruction transmitter 30 as needed, regularly, or according to the instruction from a user, depending on the working situation of the dispersed object collection system 1. In addition, the camera 20 can capture an image of a predetermined range of the activity area Fa according to a control signal from the work instruction transmitter 30. In this case, the work instruction transmitter 30 can recognize positional information of the capturing range (angle of view) of the camera 20.

With the illustrated example, the camera 20 is supported by a predetermined support (a pillar, or a wall surface or a ceiling surface of the facility) 21 in order to look down at the activity area Fa to capture the image of the activity area Fa. However, the camera 20 may be installed in the machine 10. Alternatively, in order to compensate for the blind spot of the camera 20 provided in the facility, the camera 20 provided in the facility and the camera 20 provided in the machine 10 may be used together.

Basically, the work instruction transmitter 30 sets the working area in the activity area Fa; sets a running route through which the machine 10 having started from the collection place Ga (or another place) performs the collection work in the set working area and returns to the collection place Ga; and transmits data of the setting to the machine 10.

With the illustrated example, the work instruction transmitter 30 is provided outside the machine 10, but the controller 15 of the machine 10 may have the function the same as the work instruction transmitter 30. In this case, image information acquired by the camera 20 is transmitted to the controller 15, or image information acquired by an outside camera is previously inputted to the controller 15. By this means, the controller 15 sets the working area and the running route by itself.

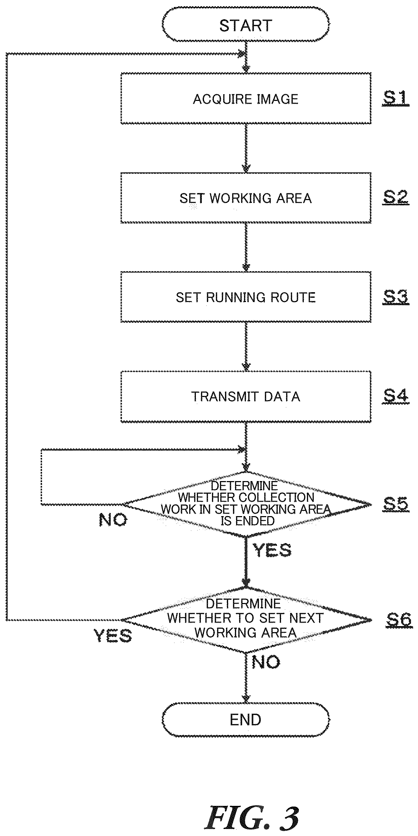

Fig. 3 schematically illustrates an operation process of the work instruction transmitter 30. In a first step (image acquisition step) S1, an image is acquired from the camera 20 to set the working area. The acquired image is an image of the field in the activity area Fa in which dispersed objects are dispersed, and a still image of the set capturing range and positional information of the capturing range are acquired at the same time.

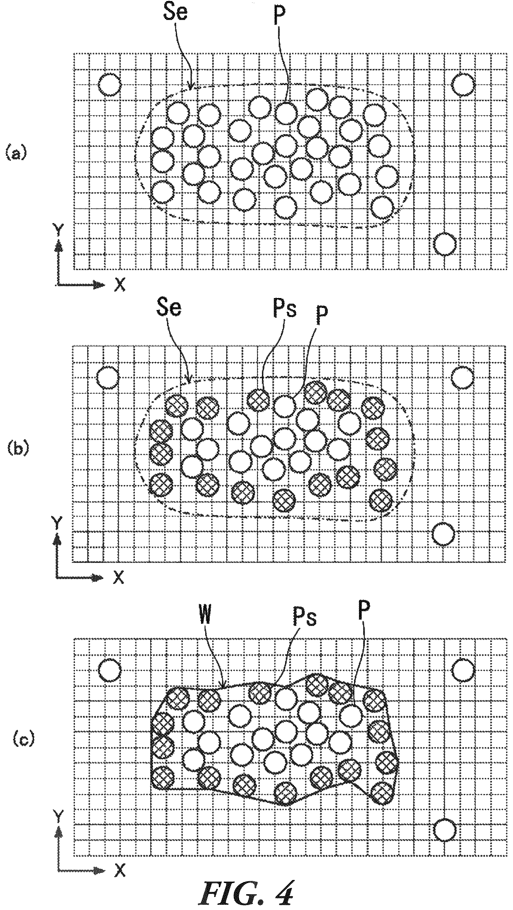

In a second step (working area setting step) S2, the working area is set based on the acquired image. Image processing is applied to the acquired image to distinguish between the image of dispersed objects (such as balls) and the other images (such as the background image). Then, as illustrated in Fig. 4(a), the positions of the dispersed objects P existing in the acquired image are recognized on a position coordinate (X-Y coordinate) corresponding to the capturing range of the acquired image.

To set the working area, after the position of each of the dispersed objects P is specified on the position coordinate, an aggregation region Se in which a plurality of dispersed objects are close together is specified as illustrated in Fig. 4(a). To specify the aggregation region Se, for example, the position coordinate and the image of the dispersed objects P are displayed on a display screen, a line surrounding the aggregation of the dispersed objects P being close together is inputted by using a predetermined input tool (such as a touch pad, a touch pen, a mouse, and a keyboard), and a closed region surrounded by the line is specified as the aggregation region Se.

The aggregation region Se may be set directly as the working area. Moreover, in order to improve the efficiency of the collection work by narrowing down the working area, and reducing the running of the machine 10 not performing the collection work to collect the dispersed objects as much as possible, the working area is set according to the following process.

In this process, after the aggregation region Se is specified, the dispersed objects P in the aggregation region Se is specified, and among them, outermost dispersed objects Ps are further specified as illustrated in Fig. 4(b). Each of the outermost dispersed objects Ps can be specified as a dispersed object P which has no dispersed object P outside it in one of the X direction and the Y direction, which is determined based on the X-Y coordinate position of each of the dispersed objects P in the aggregation region Se. Whether there is a dispersed object P outside it is determined by determining whether there is a dispersed object P outside it within the width (diameter) of the dispersed object P.

When the outermost dispersed objects Ps of the dispersed objects P in the aggregation region Se are specified, a closed region along the outer edge of each of the outermost dispersed objects Ps is set as illustrated in Fig. 4(c), and this closed region is set as a working area W. In this way, by setting the working area W, it is possible to reduce the running of the machine 10 not performing the collection work to collect the dispersed objects P as much as possible, and therefore to improve the efficiency of the collection work. Here, with the illustrated example, the closed region is set to contact the outer edges of the outermost dispersed objects Ps, but may be set to be a little apart from the outer edges of the outermost dispersed objects Ps, or may be set to connect parts such as the centers of the outermost dispersed objects Ps to each other.

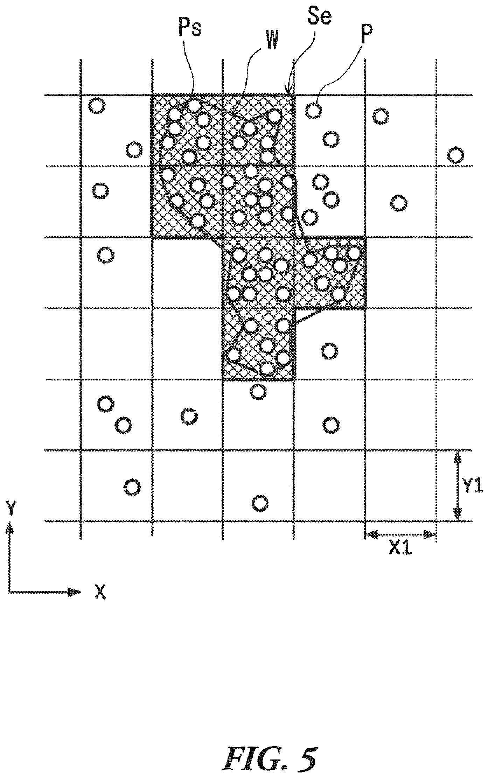

With the above-described embodiment, the aggregation region Se is specified by hand using the input tool. However, in order to perform more efficient collection work, the aggregation region Se is specified by arithmetic processing. In this case, as illustrated in Fig. 5, first, a unit region having width X1 in the X direction and width Y1 in the Y direction is set for the position of each of the dispersed objects P on the above-described position coordinate, and the number of the dispersed objects P in each of the unit regions is counted. Then, the unit regions each having the number of dispersed objects equal to or greater than a set value are connected to form the aggregation region Se. In the illustrated drawing, the set value is equal to or greater than five, and the unit regions with cross-hatching form the aggregation region Se.

The aggregation region Se with cross-hatching specified as described above can be set directly as the working area W. Meanwhile, as described above, the outermost dispersed objects Ps in the aggregation region Se are specified, and the closed region along the outer edges of the outermost dispersed objects Ps may be set as the working area W as illustrated in Fig. 5.

In addition, a method to specify the aggregation region Se by the arithmetic processing is not limited to the above-described example. For example, the positions of the dispersed objects P dispersed on the position coordinate are specified, and an aggregation of the dispersed objects in which the distance between two adjacent dispersed objects is equal to or smaller than a predetermined value is specified and may be set as the aggregation region Se.

When the aggregation region Se is specified by the arithmetic processing, the number of the dispersed objects P in the working area W is set to be smaller than the capacity of the accommodation section 11 of the machine 10. When the number of the dispersed objects P in the working area W is greater than the capacity of the accommodation section 11, the machine 10 is returned to the collection place Ga once to discharge the dispersed objects P, and collects the dispersed objects P in the working area W again, and therefore it is not possible to perform efficient collection work.

The working area W is set to allow the efficient correction work by performing the work once. In this case, the size and the location of the aggregation region Se are set to achieve the optimal efficiency, under the conditions such as the traveling distance of the machine 10 and the battery consumption.

As illustrated in Fig. 3, the working area W is set in the second step (working area setting step) S2, and next, the running route of the machine 10 is set in the third step (running route setting step) S3.

In the setting of the running route, a running route of the machine 10 from the collection place Ga (or another start point) to the working area W; a running route of the machine 10 performing the collection work to collect the dispersed objects in the working area W; a running route of the machine 10 moving from one aggregation region Se to another aggregation region Se when a plurality of aggregation regions Se forms the working area W; and a running route of the machine 10 returning from the working area W to the collection place Ga after the end of the collection work are optimally set in view of the collection efficiency and the battery consumption.

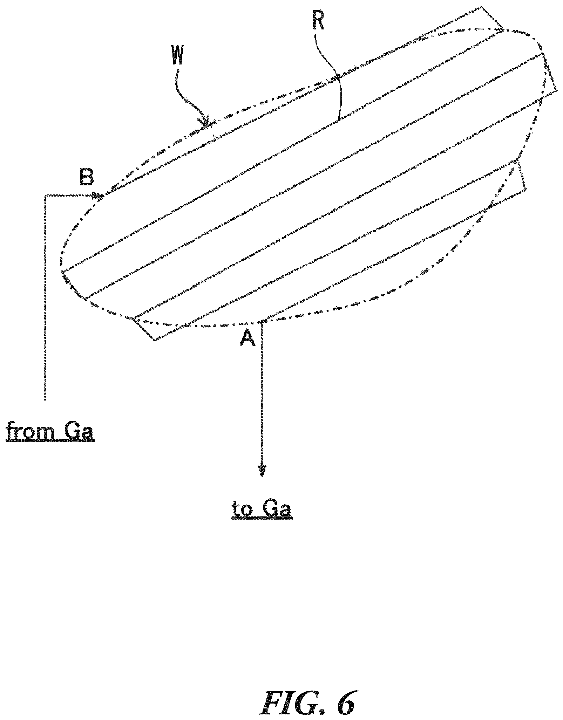

For setting the running route of the machine 10 in the working area W, for example, when the working area W is long in one direction, a running route R is formed by making turns of a straight line along the longitudinal direction of the working area W as illustrated in Fig. 6. In this way, for the running in the entire working area W, it is possible to reduce the number of turns, and therefore to improve the efficiency of the collection work.

In addition, in a case where priority consideration is given to the battery consumption, when the weight of the machine 10 is increased due to the dispersed objects accommodated in the accommodation section 11, the running route is set to shorten the running distance. For this, for example, the running route is set such that the running distance of the machine 10 from the working area W to the collection place Ga is minimized. With the example illustrated in Fig. 6, a point B at which the machine 10 enters the working area W is set to be far from the collection place Ga so that a point A at which the machine 10 leaves the working area W is close to the collection place Ga.

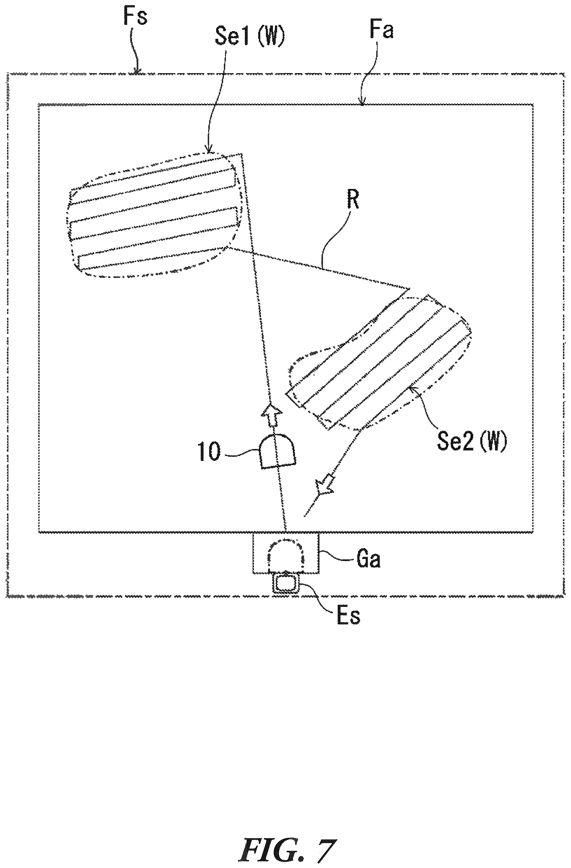

As illustrated in Fig. 7, when a plurality of aggregation regions Se1 and Se2 are specified in locations apart from one another, the running route of the machine 10 is set such that the work is performed first on the working area W in the aggregation region Se2 which is the most far from the collection place Ga, and the work is performed last on the working area W in the aggregation region Se1 which is the closest to the collection place Ga. By this means, it is possible to shorten the running distance of the machine 10 having an increased weight due to the dispersed objects P accommodated in the accommodation section 11, and therefore to suppress the battery consumption.

When a plurality of aggregation regions Se are specified, any of them may be selected to set the working area W. In this case, it is preferred that the aggregation region Se with a high work efficiency is selected based on the distance from the collection place Ga to the aggregation region Se and the number of the dispersed objects in the aggregation region Se, and the working area W is set in the selected aggregation region Se.

Meanwhile, when a plurality of aggregation regions Se are specified, all of them may be set as the working area W. In this case, the priority of the plurality of aggregation regions Se is determined, based on the distance from the collection place Ga to the aggregation regions Se and the number of the dispersed objects in the aggregation regions Se, and the collection work may be performed first on the working area W in the aggregation region Se with a high priority.

The running speed of the machine 10 on the running route may be appropriately set as follows: in view of the collection rate, the running speed is reduced in the working area W; in view of the battery consumption and the working time, the running speed of the machine 10 having the empty accommodation section 11 is increased; and the running speed is reduced when the occupancy rate of the accommodation section 11 is high.

When the running route is set, data of the set working area W and data of the set running route are transmitted from the work instruction transmitter 30 to the controller 15 of the machine 10 in a fourth step (data transmission step) S4 as illustrated in Fig. 3. The controller 15 of the machine 10 controls each of the parts of the machine 10 according to the data transmitted from the work instruction transmitter 30, and performs the collection work to collect the dispersed objects P in the set working area W while causing the machine 10 to run by itself.

Then, the collection work to collect the dispersed objects P in the working area W is continued until it is determined that the work is ended (step S5: NO), and when determining that the work in the working area W is ended (step S5: YES), the controller 15 transmits a signal to inform the end to the work instruction transmitter 30. After that, the work instruction transmitter 30 determines whether to set the next working area W, and when it is determined to set the next working area W (step S6: YES), the step is returned to the step S1, and the step S1 to the step S5 are performed. On the other hand, when it is determined not to set the next working area W (step S6: NO), the process is ended.

The setting of the working area W in the step S1 may be performed at an appropriate timing. For example, the setting may be performed regularly at a prescribed interval or time, or may be performed optionally by designation of a user. Alternatively, the setting may be performed at the timing when the machine 10 returns to the collection place Ga.

As described above, the dispersed object collection system 1 can properly set the working area W to reduce the running of the machine 10 not performing the collection work to collect the dispersed objects as much as possible, and therefore can improve the efficiency of the collection work. In addition, it is possible to effectively promote the efficiency of the work by setting the working area W and the running route in view of the battery consumption.

The dispersed object collection system 1 can be installed in a facility such as a golf practice range, and can be used to collect balls hit from bays. In this case, even though the bays are occupied, it is possible to perform the collection work to collect balls, and perform efficient collection work. Therefore, it is possible to shorten the period of time until the balls hit from the bays are collected. By this means, it is possible to reduce the stock quantity of the balls in the facility, and consequently to smoothly and economically manage the facility.

However, the dispersed object collection system 1 according to the embodiment of the invention is not limited to the system for the collection work to collect balls. The dispersed object collection system 1 is applicable to the collection work to collect various kinds of dispersed objects such as harvested crops and grass on an agricultural field, and can perform efficient collection work.

As described above, the embodiments of the present invention have been described in detail with reference to the drawings. However, the specific configuration is not limited to the embodiments, and the design can be changed without departing from the scope of the attached claims. In addition, the above-described embodiments, within the scope of the attached claims, can be combined by utilizing each other's technology as long as there is no particular contradiction or problem in the purpose and configuration.

### Reference Signs List

1: dispersed object collection system
10: machine, 11: accommodation section, 12: battery,
13: running part, 13a: running wheel, 13b: running drive part,
14: pickup mechanism, 15: controller, 16: position detector,
20: camera, 21: support, 30: work instruction transmitter,
P, Ps: dispersed object, Se, Se1, Se2: aggregation region,
W: working area, R: running route, Fa: activity area,
Fs: facility zone,
Ga: collection place, Es: charging equipment

## Claims

1. A dispersed object collection system (1) comprising an electric machine (10) configured to:
run by itself along a set running route (R) in an activity area (Fa),
start from a collection place (Ga),
run by itself in a set working area (W) to accommodate dispersed objects (P) dispersed in the working area (W) into an accommodation section (11) provided in or outside the machine (10), and
collect the dispersed objects (P) in the collection place (Ga),
the dispersed object collection system (1) further comprising:
a camera (20) configured to look down at the activity area (Fa) to capture an image of the activity area (Fa) and
a work instruction transmitter (30) configured to set the working area (W) in the activity area (Fa) and set a running route (R) through which the machine (10) having started from the collection place (Ga) performs the collection work in the set working area (W) and returns to the collection place (Ga),
wherein the work instruction transmitter (30) is further configured to:
acquire an image of the field in the activity area (Fa) in which dispersed objects (P) are dispersed, from the camera (20),
recognize the positions of the dispersed objects (P) existing in the acquired image on a position coordinate (X-Y coordinate) corresponding to the capturing range of the acquired image,
**characterized in that** the work instruction transmitter (30) is further configured to
form an aggregation region (Se; Se1, Se2) by connecting unit regions, each of the unit regions having the number of dispersed objects (P) equal to or greater than a set value or, alternatively, set the aggregation region (Se; Se1, Se2) such that a distance between two adjacent dispersed objects (P) is equal to or smaller than a set value, and
set the working area (W) as a closed region along outer edges of the dispersed objects (P) in the aggregation region in which a plurality of dispersed objects (P) are close together.

2. The dispersed object collection system (1) according to claim 1, wherein the working area (W) is set such that the number of dispersed objects (P) in the working area (W) is smaller than capacity of the accommodation section (11).

3. The dispersed object collection system (1) according to one of claims 1 to 2, wherein the running route (R) of the machine (10) in the working area (W) is formed by making turns of a straight line along a longitudinal direction of the working area (W).

4. The dispersed object collection system (1) according to one of claims 1 to 3, wherein the collection place (Ga) is provided with charging equipment (Es) configured to charge a battery (12) of the machine (10).

5. The dispersed object collection system (1) according to claim 4, wherein the running route (R) of the machine (10) is set such that a running distance of the machine (10) from the working area (W) to the collection place (Ga) is minimized.

6. The dispersed object collection system (1) according to claim 4, wherein:
the working area (W) is set to be formed by a plurality of aggregation regions (Se1, Se2) apart from each other; and
the running route (R) of the machine (10) is set such that work is performed first on the working area (W) which is the most far from the collection place (Ga), and work is performed last on the working area (W) which is the closest to the collection place (Ga).

7. The dispersed object collection system (1) according to one of claims 1 to 6, wherein the aggregation region (Se; Se1, Se2) is specified based on a captured image of the dispersed objects (P) dispersed in the activity area (Fa).

8. A dispersed object collection method by causing an electric machine (10), which is part of a dispersed object collection system (1) and is configured to run by itself along a set running route (R) in an activity area (Fa), to:
start from a collection place (Ga) and;
run by itself in a set working area (W) to accommodate dispersed objects (P) dispersed in the working area (W) into an accommodation section (11) provided in or outside the machine (10) and collect the dispersed objects (P) in the collection place (Ga),
**characterized in that** the dispersed object collection system (1) comprises:
a camera (20) configured to look down at the activity area (Fa) to capture an image of the activity area (Fa), and
a work instruction transmitter (30) configured to set the working area (W) in the activity area (Fa) and set a running route (R) through which the machine (10) having started from the collection place (Ga) performs the collection work in the set working area (W) and returns to the collection place (Ga),
the method comprising:
setting, by the work instruction transmitter (30), the working area (W) in the activity area (Fa) and set a running route (R) through which the machine (10) having started from the collection place (Ga) performs the collection work in the set working area (W) and returns to the collection place (Ga),
acquiring, by the work instruction transmitter (30), an image of the field in the activity area (Fa) in which dispersed objects (P) are dispersed,
recognizing, by the work instruction transmitter (30), the positions of the dispersed objects (P) existing in the acquired image on a position coordinate (X-Y coordinate) corresponding to the capturing range of the acquired image,
forming, by the work instruction transmitter (30), an aggregation region (Se; Se1, Se2) by connecting unit regions, each of the unit regions having the number of dispersed objects (P) equal to or greater than a set value or setting the aggregation region (Se; Se1, Se2) such that a distance between two adjacent dispersed objects (P) is equal to or smaller than a set value, and
setting, by the work instruction transmitter (30), the working area (W) as a closed region along outer edges of the dispersed objects (P) in an aggregation region (Se; Se1, Se2) in which a plurality of dispersed objects (P) are close together.

9. The dispersed object collection method according to claim 8, comprising:
acquiring, by the work instruction transmitter (30), a captured image of the dispersed objects (P) dispersed in the activity area (Fa); and
specifying, by the work instruction transmitter (30), the aggregation region (Se; Se1, Se2) based on positions of the dispersed objects (P) in the image.

10. The dispersed object collection method according to claim 8, comprising:
acquiring, by the work instruction transmitter (30), a captured image of the dispersed objects (P) dispersed in the activity area (Fa);
counting, by the work instruction transmitter (30), the number of the dispersed objects (P) for each of unit regions in the image;
specifying, by the work instruction transmitter (30), an aggregation region (Se; Se1, Se2) formed by connecting the unit regions each of which has the number of the dispersed objects (P) equal to or greater than a set value; and
setting, by the work instruction transmitter (30), the working area (W) based on positions of the dispersed objects (P) existing in the aggregation region (Se; Se1, Se2).

## Patentansprüche

1. Sammelsystem (1) für verstreute Objekte, umfassend eine elektrische Maschine (10), die konfiguriert ist, um:
von selbst entlang einer festgelegten Laufroute (R) in einem Aktivitätsbereich (Fa) zu laufen,
von einem Sammelplatz (Ga) aus zu beginnen,
von selbst in einem festgelegten Arbeitsbereich (W) zu laufen, um verstreute Objekte (P), die in dem Arbeitsbereich (W) verstreut sind, in einen Aufnahmeabschnitt (11) aufzunehmen, der in oder außerhalb der Maschine (10) bereitgestellt ist, und
die verstreuten Objekte (P) an dem Sammelplatz (Ga) zu sammeln,
wobei das Sammelsystem (1) für verstreute Objekte ferner umfasst:
eine Kamera (20), die konfiguriert ist, um auf den Aktivitätsbereich (Fa) herunterzuschauen, um ein Bild des Aktivitätsbereichs (Fa) aufzunehmen, und
einen Arbeitsanweisungssender (30), der konfiguriert ist, um den Arbeitsbereich (W) in dem Aktivitätsbereich (Fa) festzulegen und eine Laufroute (R) festzulegen, durch die die Maschine (10), die von dem Sammelplatz (Ga) aus gestartet ist, die Sammelarbeit in dem festgelegten Arbeitsbereich (W) durchführt und zu dem Sammelplatz (Ga) zurückkehrt,
wobei der Arbeitsanweisungssender (30) ferner konfiguriert ist, um:
ein Bild des Feldes in dem Aktivitätsbereich (Fa), in dem verstreute Objekte (P) verstreut sind, von der Kamera (20) zu erhalten,
die Positionen der verstreuten Objekte (P), die in dem erhaltenen Bild vorhanden sind, auf einer Positionskoordinate (X-Y-Koordinate) zu erkennen, die dem Aufnahmebereich des erhaltenen Bildes entspricht,
**dadurch gekennzeichnet, dass** der Arbeitsanweisungssender (30) ferner konfiguriert ist, um
einen Aggregationsbereich (Se; Se1, Se2) durch Verbinden von Einheitsbereichen zu bilden, wobei jeder der Einheitsbereiche die Anzahl von verstreuten Objekten (P) aufweist, die gleich oder größer als ein festgelegter Wert ist, oder alternativ den Aggregationsbereich (Se; Se1, Se2) derart festzulegen, dass ein Abstand zwischen zwei benachbarten verstreuten Objekten (P) gleich oder kleiner als ein festgelegter Wert ist, und
den Arbeitsbereich (W) als einen geschlossenen Bereich entlang äußerer Kanten der verstreuten Objekte (P) in dem Aggregationsbereich festzulegen, in dem eine Vielzahl von verstreuten Objekten (P) nahe beieinander sind.

2. Sammelsystem (1) für verstreute Objekte nach Anspruch 1, wobei der Arbeitsbereich (W) derart festgelegt ist, dass die Anzahl von verstreuten Objekten (P) in dem Arbeitsbereich (W) kleiner als die Kapazität des Aufnahmeabschnitts (11) ist.

3. Sammelsystem (1) für verstreute Objekte nach einem der Ansprüche 1 bis 2, wobei die Laufroute (R) der Maschine (10) in dem Arbeitsbereich (W) durch Hin- und Herfahrten entlang einer Längsrichtung des Arbeitsbereichs (W) gebildet wird.

4. Sammelsystem (1) für verstreute Objekte nach einem der Ansprüche 1 bis 3, wobei der Sammelplatz (Ga) mit Ladeausrüstung (Es) versehen ist, die konfiguriert ist, um einen Akkumulator (12) der Maschine (10) zu laden.

5. Sammelsystem (1) für verstreute Objekte nach Anspruch 4, wobei die Laufroute (R) der Maschine (10) derart festgelegt ist, dass ein Laufabstand der Maschine (10) von dem Arbeitsbereich (W) zu dem Sammelplatz (Ga) minimiert ist.

6. Sammelsystem (1) für verstreute Objekte nach Anspruch 4, wobei:
der Arbeitsbereich (W) derart festgelegt ist, dass er durch eine Vielzahl von Aggregationsbereichen (Se1, Se2) gebildet wird, die voneinander beabstandet sind; und
die Laufroute (R) der Maschine (10) derart festgelegt ist, dass zuerst an dem Arbeitsbereich (W), der am weitesten von dem Sammelplatz (Ga) entfernt ist, Arbeit durchgeführt wird und zuletzt an dem Arbeitsbereich (W), der dem Sammelplatz (Ga) am nächsten ist, Arbeit durchgeführt wird.

7. Sammelsystem (1) für verstreute Objekte nach einem der Ansprüche 1 bis 6, wobei der Aggregationsbereich (Se; Se1, Se2) basierend auf einem aufgenommenen Bild der verstreuten Objekte (P), die in dem Aktivitätsbereich (Fa) verstreut sind, spezifiziert ist.

8. Sammelverfahren für verstreute Objekte, indem eine elektrische Maschine (10), die Teil eines Sammelsystems (1) für verstreute Objekte ist und konfiguriert ist, um von selbst entlang einer festgelegten Laufroute (R) in einem Aktivitätsbereich (Fa) zu laufen, veranlasst wird, um:
von einem Sammelplatz (Ga) aus zu beginnen und;
von selbst in einem festgelegten Arbeitsbereich (W) zu laufen, um verstreute Objekte (P), die in dem Arbeitsbereich (W) verstreut sind, in einen Aufnahmeabschnitt (11) aufzunehmen, der in oder außerhalb der Maschine (10) bereitgestellt ist, und die verstreuten Objekte (P) an dem Sammelplatz (Ga) zu sammeln,
**dadurch gekennzeichnet, dass** das Sammelsystem (1) für verstreute Objekte umfasst:
eine Kamera (20), die konfiguriert ist, um auf den Aktivitätsbereich (Fa) herunterzuschauen, um ein Bild des Aktivitätsbereichs (Fa) aufzunehmen, und
einen Arbeitsanweisungssender (30), der konfiguriert ist, um den Arbeitsbereich (W) in dem Aktivitätsbereich (Fa) festzulegen und eine Laufroute (R) festzulegen, durch die die Maschine (10), die von dem Sammelplatz (Ga) aus gestartet ist, die Sammelarbeit in dem festgelegten Arbeitsbereich (W) durchführt und zu dem Sammelplatz (Ga) zurückkehrt,
wobei das Verfahren umfasst:
Festlegen, durch den Arbeitsanweisungssender (30), des Arbeitsbereichs (W) in dem Aktivitätsbereich (Fa) und Festlegen einer Laufroute (R), durch die die Maschine (10), die von dem Sammelplatz (Ga) aus gestartet ist, die Sammelarbeit in dem festgelegten Arbeitsbereich (W) durchführt und zu dem Sammelplatz (Ga) zurückkehrt,
Erhalten, durch den Arbeitsanweisungssender (30), eines Bildes des Feldes in dem Aktivitätsbereich (Fa), in dem verstreute Objekte (P) verstreut sind,
Erkennen, durch den Arbeitsanweisungssender (30), der Positionen der verstreuten Objekte (P), die in dem erhaltenen Bild vorhanden sind, auf einer Positionskoordinate (X-Y-Koordinate), die dem Aufnahmebereich des erhaltenen Bildes entspricht,
Bilden, durch den Arbeitsanweisungssender (30), eines Aggregationsbereichs (Se; Se1, Se2) durch Verbinden von Einheitsbereichen, wobei jeder der Einheitsbereiche die Anzahl von verstreuten Objekten (P) aufweist, die gleich oder größer als ein festgelegter Wert ist, oder Festlegen des Aggregationsbereichs (Se; Se1, Se2) derart, dass ein Abstand zwischen zwei benachbarten verstreuten Objekten (P) gleich oder kleiner als ein festgelegter Wert ist, und
Festlegen, durch den Arbeitsanweisungssender (30), des Arbeitsbereichs (W) als einen geschlossenen Bereich entlang äußerer Kanten der verstreuten Objekte (P) in einem Aggregationsbereich (Se; Se1, Se2), in dem eine Vielzahl von verstreuten Objekten (P) nahe beieinander sind.

9. Sammelverfahren für verstreute Objekte nach Anspruch 8, umfassend:
Erhalten, durch den Arbeitsanweisungssender (30), eines aufgenommenen Bildes der verstreuten Objekte (P), die in dem Aktivitätsbereich (Fa) verstreut sind; und
Spezifizieren, durch den Arbeitsanweisungssender (30), des Aggregationsbereichs (Se; Se1, Se2) basierend auf Positionen der verstreuten Objekte (P) in dem Bild.

10. Sammelverfahren für verstreute Objekte nach Anspruch 8, umfassend:
Erhalten, durch den Arbeitsanweisungssender (30), eines aufgenommenen Bildes der verstreuten Objekte (P), die in dem Aktivitätsbereich (Fa) verstreut sind;
Zählen, durch den Arbeitsanweisungssender (30), der Anzahl der verstreuten Objekte (P) für jeden der Einheitsbereiche in dem Bild;
Spezifizieren, durch den Arbeitsanweisungssender (30), eines Aggregationsbereichs (Se; Se1, Se2), der durch Verbinden der Einheitsbereiche gebildet ist, von denen jeder die Anzahl der verstreuten Objekte (P) aufweist, die gleich oder größer als ein festgelegter Wert ist; und
Festlegen, durch den Arbeitsanweisungssender (30), des Arbeitsbereichs (W) basierend auf Positionen der verstreuten Objekte (P), die in dem Aggregationsbereich (Se; Se1, Se2) vorhanden sind.

## Revendications

1. Système de collecte d'objets dispersés (1) comprenant une machine électrique (10) configurée pour :
se déplacer sur elle-même le long d'un itinéraire de déplacement défini (R) dans une zone d'activité (Fa),
commencer à partir d'un lieu de collecte (Ga),
se déplacer sur elle-même dans une zone de travail définie (W) pour loger des objets dispersés (P) dispersés dans la zone de travail (W) dans une section de logement (11) prévue dans ou à l'extérieur de la machine (10), et
collecter les objets dispersés (P) dans le lieu de collecte (Ga),
le système de collecte d'objets dispersés (1) comprenant en outre :
une caméra (20) configurée pour regarder vers le bas la zone d'activité (Fa) pour capturer une image de la zone d'activité (Fa) et
un transmetteur d'instruction de travail (30) configuré pour définir la zone de travail (W) dans la zone d'activité (Fa) et définir un itinéraire de déplacement (R) à travers lequel la machine (10) ayant commencé à partir du lieu de collecte (Ga) effectue le travail de collecte dans la zone de travail définie (W) et retourne au lieu de collecte (Ga),
dans lequel le transmetteur d'instruction de travail (30) est en outre configuré pour :
acquérir une image du champ dans la zone d'activité (Fa) dans laquelle des objets dispersés (P) sont dispersés, à partir de la caméra (20),
reconnaître les positions des objets dispersés (P) existant dans l'image acquise sur une coordonnée de position (coordonnée X-Y) correspondant à la plage de capture de l'image acquise,
**caractérisé en ce que** le transmetteur d'instruction de travail (30) est en outre configuré pour
former une région d'agrégation (Se ; Se1, Se2) en connectant des régions d'unité, chacune des régions d'unité ayant le nombre d'objets dispersés (P) égal ou supérieur à une valeur définie ou, en variante, définir la région d'agrégation (Se ; Se1, Se2) de sorte qu'une distance entre deux objets dispersés adjacents (P) est égale ou inférieure à une valeur définie, et
définir la zone de travail (W) comme une région fermée le long de bords extérieurs des objets dispersés (P) dans la région d'agrégation dans laquelle une pluralité d'objets dispersés (P) sont proches les uns des autres.

2. Système de collecte d'objets dispersés (1) selon la revendication 1, dans lequel la zone de travail (W) est définie de sorte que le nombre d'objets dispersés (P) dans la zone de travail (W) est inférieur à la capacité de la section de logement (11).

3. Système de collecte d'objets dispersés (1) selon l'une des revendications 1 à 2, dans lequel l'itinéraire de déplacement (R) de la machine (10) dans la zone de travail (W) est formé en faisant des tours d'une ligne droite le long d'une direction longitudinale de la zone de travail (W).

4. Système de collecte d'objets dispersés (1) selon l'une des revendications 1 à 3, dans lequel le lieu de collecte (Ga) est pourvu d'un équipement de charge (Es) configuré pour charger une batterie (12) de la machine (10).

5. Système de collecte d'objets dispersés (1) selon la revendication 4, dans lequel l'itinéraire de déplacement (R) de la machine (10) est défini de sorte qu'une distance de déplacement de la machine (10) de la zone de travail (W) au lieu de collecte (Ga) est minimisée.

6. Système de collecte d'objets dispersés (1) selon la revendication 4, dans lequel :
la zone de travail (W) est définie pour être formée par une pluralité de régions d'agrégation (Se1, Se2) espacées les unes des autres ; et
l'itinéraire de déplacement (R) de la machine (10) est défini de sorte que le travail est effectué en premier sur la zone de travail (W) qui est la plus éloignée du lieu de collecte (Ga), et le travail est effectué en dernier sur la zone de travail (W) qui est la plus proche du lieu de collecte (Ga).

7. Système de collecte d'objets dispersés (1) selon l'une des revendications 1 à 6, dans lequel la région d'agrégation (Se ; Se1, Se2) est spécifiée sur la base d'une image capturée des objets dispersés (P) dispersés dans la zone d'activité (Fa).

8. Procédé de collecte d'objets dispersés en amenant une machine électrique (10), qui fait partie d'un système de collecte d'objets dispersés (1) et est configurée pour se déplacer par elle-même le long d'un itinéraire de déplacement défini (R) dans une zone d'activité (Fa), à :
commencer à partir d'un lieu de collecte (Ga) et ;
se déplacer sur elle-même dans une zone de travail définie (W) pour loger des objets dispersés (P) dispersés dans la zone de travail (W) dans une section de logement (11) prévue dans ou à l'extérieur de la machine (10) et collecter les objets dispersés (P) dans le lieu de collecte (Ga), **caractérisé en ce que** le système de collecte d'objets dispersés (1) comprend :
une caméra (20) configurée pour regarder vers le bas la zone d'activité (Fa) pour capturer une image de la zone d'activité (Fa), et
un transmetteur d'instruction de travail (30) configuré pour définir la zone de travail (W) dans la zone d'activité (Fa) et définir un itinéraire de déplacement (R) à travers lequel la machine (10) ayant commencé à partir du lieu de collecte (Ga) effectue le travail de collecte dans la zone de travail définie (W) et retourne au lieu de collecte (Ga),
le procédé comprenant :
définir, par le transmetteur d'instruction de travail (30), la zone de travail (W) dans la zone d'activité (Fa) et définir un itinéraire de déplacement (R) à travers lequel la machine (10) ayant commencé à partir du lieu de collecte (Ga) effectue le travail de collecte dans la zone de travail définie (W) et retourne au lieu de collecte (Ga),
acquérir, par le transmetteur d'instruction de travail (30), une image du champ dans la zone d'activité (Fa) dans laquelle des objets dispersés (P) sont dispersés,
reconnaître, par le transmetteur d'instruction de travail (30), les positions des objets dispersés (P) existant dans l'image acquise sur une coordonnée de position (coordonnée X-Y) correspondant à la plage de capture de l'image acquise,
former, par le transmetteur d'instruction de travail (30), une région d'agrégation (Se ; Se1, Se2) en connectant des régions d'unité, chacune des régions d'unité ayant le nombre d'objets dispersés (P) égal ou supérieur à une valeur définie ou définir la région d'agrégation (Se ; Se1, Se2) de sorte qu'une distance entre deux objets dispersés adjacents (P) est égale ou inférieure à une valeur définie, et
définir, par le transmetteur d'instruction de travail (30), la zone de travail (W) comme une région fermée le long de bords extérieurs des objets dispersés (P) dans une région d'agrégation (Se ; Se1, Se2) dans laquelle une pluralité d'objets dispersés (P) sont proches les uns des autres.

9. Procédé de collecte d'objets dispersés selon la revendication 8, comprenant :
acquérir, par le transmetteur d'instruction de travail (30), une image capturée des objets dispersés (P) dispersés dans la zone d'activité (Fa) ; et
spécifier, par le transmetteur d'instruction de travail (30), la région d'agrégation (Se ; Se1, Se2) sur la base de positions des objets dispersés (P) dans l'image.

10. Procédé de collecte d'objets dispersés selon la revendication 8, comprenant :
acquérir, par le transmetteur d'instruction de travail (30), une image capturée des objets dispersés (P) dispersés dans la zone d'activité (Fa) ;
compter, par le transmetteur d'instruction de travail (30), le nombre des objets dispersés (P) pour chacune des régions d'unité dans l'image ;
spécifier, par le transmetteur d'instruction de travail (30), une région d'agrégation (Se ; Se1, Se2) formée en connectant les régions d'unité dont chacune a le nombre des objets dispersés (P) égal ou supérieur à une valeur définie ; et
définir, par le transmetteur d'instruction de travail (30), la zone de travail (W) sur la base de positions des objets dispersés (P) existant dans la région d'agrégation (Se ; Se1, Se2).
